(19) Europäisches Patentamt
European Patent Office
Office européen des brevets

(11) EP 4 510 268 A1

(12) EUROPEAN PATENT APPLICATION

(43) Date of publication:
**19.02.2025 Bulletin 2025/08**

(21) Application number: **24194961.9**

(22) Date of filing: **16.08.2024**

(51) International Patent Classification (IPC):
***H01M 10/0525*** *(2010.01)* ***H01M 10/0567*** *(2010.01)*
***H01M 10/0568*** *(2010.01)* ***H01M 10/0569*** *(2010.01)*

(52) Cooperative Patent Classification (CPC):
**H01M 10/0525; H01M 10/0567; H01M 10/0568; H01M 10/0569;** H01M 2300/0025; H01M 2300/0034; H01M 2300/0037; Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.08.2023 CN 202311033943**

(71) Applicant: **Ningde Amperex Technology Ltd.**
**Ningde City, Fujian 352100 (CN)**

(72) Inventors:
- **LIU, Junfei**
**Ningde City, Fujian Province, People s Republic of China, 352100 (CN)**
- **CUI, Hui**
**Ningde City, Fujian Province, People s Republic of China, 352100 (CN)**
- **ZHANG, Lilan**
**Ningde City, Fujian Province, People s Republic of China, 352100 (CN)**

(74) Representative: **Icosa**
**83 avenue Denfert-Rochereau**
**75014 Paris (FR)**

(54) **ELECTROCHEMICAL APPARATUS AND ELECTRONIC APPARATUS CONTAINING THE SAME**

(57) An electrochemical apparatus includes a positive electrode, a negative electrode, a separator, and an electrolyte. The electrolyte includes a diluent, an electrolytic salt, and a compound of formula III. The diluent is selected from a group consisting of a compound of formula I and a compound of formula II. A molar mass of the diluent is Mz, and based on a total weight of the electrolyte, a percentage of the diluent is z wt%; a molar mass of the electrolytic salt is Mx, and based on the total weight of the electrolyte, a percentage of the electrolytic salt is x wt%; and a molar mass of the compound of formula III is My, and based on the total weight of the electrolyte, a percentage of the compound of formula III is y wt%, satisfying:

$$0.4{:}1 \leq \frac{y}{My} : \frac{x}{Mx} \leq 4{:}1;$$

and

$$\frac{\frac{z}{Mz}}{\frac{y}{My}+\frac{x}{Mx}} \geq 1.5.$$

EP 4 510 268 A1

## Description

### TECHNICAL FIELD

This application relates to the field of energy storage technologies, and in particular, to an electrochemical apparatus and an electronic apparatus containing the same.

### BACKGROUND

As a portable chemical energy source, lithium-ion batteries have advantages such as high energy density, high working voltage platform, low self-discharge, long service life, and environmental friendliness. They are widely used in consumer electronics (such as mobile phones, laptops, and cameras), energy storage products (home energy storage, energy storage power stations, UPS power supplies, and the like), and new energy vehicles, among other fields and industries. With the continuous enrichment of product application scenarios, the requirements for battery energy density are increasing. Increasing the upper voltage limit of the battery or increasing the nickel content in ternary materials allows more lithium to be released and contribute to capacity, but this leads to a decrease in the structural stability of the positive electrode active material. Therefore, there is a need in the art for an electrolyte not only having superior oxidative stability but also capable of enhancing the stability of the electrode plates of the electrochemical apparatus.

### SUMMARY

To solve the above problems, according to a first aspect, an embodiment of this application provides an electrochemical apparatus, including a positive electrode, a negative electrode, a separator, and an electrolyte. The electrolyte includes a diluent, an electrolytic salt, and a compound of formula III. The diluent is selected from a group consisting of a compound of formula I and a compound of formula II. A molar mass of the diluent is Mz, and based on a total weight of the electrolyte, a percentage of the diluent is z wt%; a molar mass of the electrolytic salt is Mx, and based on the total weight of the electrolyte, a percentage of the electrolytic salt is x wt%; and a molar mass of the compound of formula III is My, and based on the total weight of the electrolyte, a percentage of the compound of formula III is y wt%, satisfying:

$$0.4:1 \leq \frac{y}{My} : \frac{x}{Mx} \leq 4:1;$$

and

$$\frac{\frac{z}{Mz}}{\frac{y}{My}+\frac{x}{Mx}} \geq 1.5$$

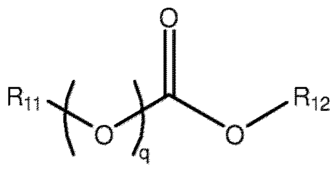 formula I 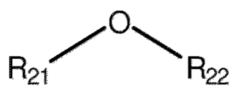 formula II

where q is 0 or 1, $R_{11}$ and $R_{12}$ are selected from $C_{1-3}$ alkyl group and fluorine-substituted $C_{1-3}$ alkyl group, and $R_{21}$ and $R_{22}$ are selected from $C_{1-4}$ alkyl group and fluorine-substituted $C_{1-4}$ alkyl group; and

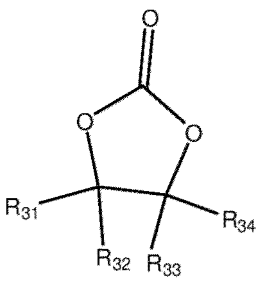 formula III,

where $R_{31}$, $R_{32}$, $R_{33}$, and $R_{34}$ are selected from H, F, $C_{1-3}$ alkyl group, fluorine-substituted $C_{1-3}$ alkyl group, and at least one of $R_{31}$, $R_{32}$, $R_{33}$, or $R_{34}$ is a fluorine atom.

In the electrolyte of this application, the compound of formula III can coordinate with the cations in the electrolytic salt. Because the electrolyte of this application contains the electrolytic salt and the compound of formula III in specific molar ratios, not only can the charge distribution of the compound of formula III be balanced to reduce the possibility of HF generation due to defluorination, but also a protective film formed by outer layer anions of complexes of the compound of formula III and the electrolytic salt is produced on the surfaces of electrode plates of the electrochemical apparatus. This reduces side reactions while improving the stability of the electrolyte and the electrode plates. The diluent in this application has a low dielectric constant and weak coordination with the cations in the electrolytic salt. This is more conducive to the coordination of the compound of formula III with the cations in electrolytic salt. Additionally, the diluent in this application has low viscosity and good infiltration capability. Therefore, while reducing the viscosity of the electrolyte and improving the conductivity, the diluent maintains the coordination structure of the compound of formula III with the cations in electrolytic salt.

In some embodiments, $\frac{\frac{z}{Mz}}{\frac{y}{My}+\frac{x}{Mx}} \geq 1.5$. When $\frac{\frac{z}{Mz}}{\frac{y}{My}+\frac{x}{Mx}} < 1.5$, an excessively high percentage of the diluent will lead to a reduction in solvated ion clusters, thereby reducing the conductivity of the electrolyte, and significantly increasing the probability of side reactions at the interface. Therefore, in this application, the value of $\frac{\frac{z}{Mz}}{\frac{y}{My}+\frac{x}{Mx}}$ is set above 1.5.

In some embodiments, because the excessively low percentage of the diluent not only cannot efficiently promote the coordination of the compound of formula III with the electrolytic salt but also increases the viscosity of the electrolyte and reduces the heat conduction efficiency and the migration rate of ion clusters, thereby deteriorating the high-temperature performance and rate performance of the electrochemical apparatus, it is set that $1.5 \leq \frac{\frac{z}{Mz}}{\frac{y}{My}+\frac{x}{Mx}} \leq 5$, especially $1.5 \leq \frac{\frac{z}{Mz}}{\frac{y}{My}+\frac{x}{Mx}} \leq 4$.

In some embodiments, $0.5:1 \leq \frac{y}{My} : \frac{x}{Mx} \leq 3.5:1$. When this ratio is too low, too little of the compound of formula III can only coordinate with part of the electrolytic salt, and thus cannot achieve the desired stability. When this ratio is too high, it may increase the risk of defluorination. Therefore, in this application, this ratio is limited to 0.5 to 3.5.

In some embodiments, the electrolytic salt includes at least one of hexafluorophosphate A-$PF_6$, bis(fluorosulfonyl)imide A-FSI, bis(trifluoromethanesulfonyl)imide A-TFSI, difluorooxalate borate A-DFOB, or difluorooxalate phosphate A-DFOP, where A is selected from lithium ions, sodium ions, potassium ions, and cesium ions, and $10 \leq x \leq 25$.

In some embodiments, the compound of formula III includes at least one of fluoroethylene carbonate or difluoroethylene carbonate, and $5 \leq y \leq 30$.

In some embodiments, the compound of formula III includes fluoroethylene carbonate, and based on the total weight of the electrolyte, a percentage of fluoroethylene carbonate is more than 10 wt%.

In some embodiments, the dielectric constant ε of the diluent is ≤10.

In some embodiments, the compound of formula I includes at least one of the following:

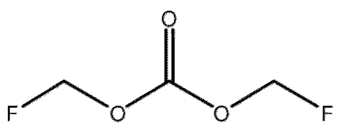
formula I-1

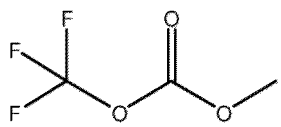
formula I-2

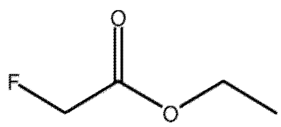
formula I-3

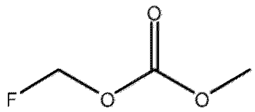
formula I-4

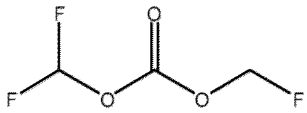
formula I-5

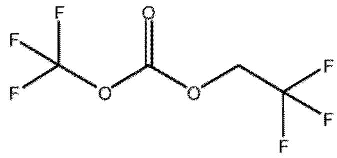
formula I-6

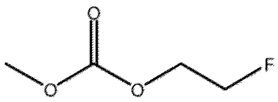
formula I-7

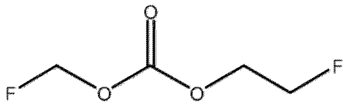
formula I-8

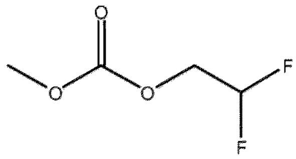
formula I-9

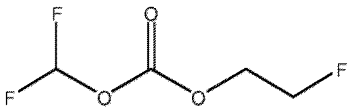
formula I-10

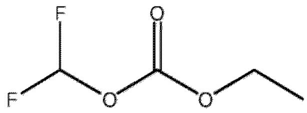
formula I-11

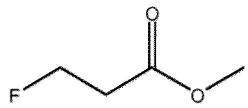
formula I-12

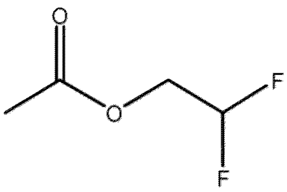
formula I-13

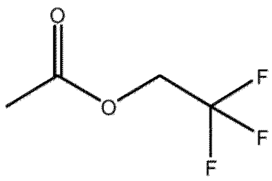
formula I-14

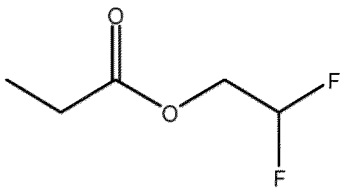
formula I-15

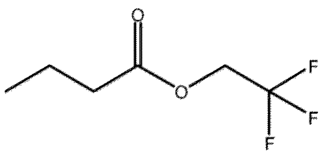
formula I-16

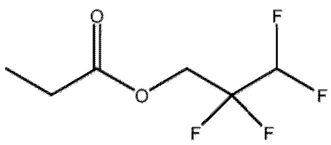
formula I-17

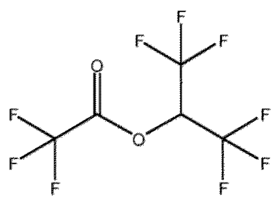
formula I-18

and/or the compound of formula II includes at least one of the following:

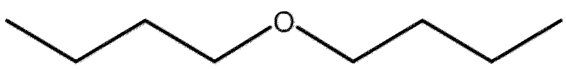
formula II-1

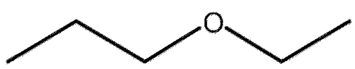
formula II-2

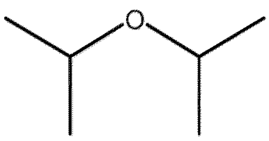
formula II-3

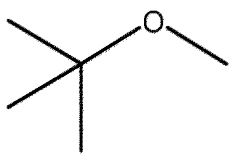
formula II-4

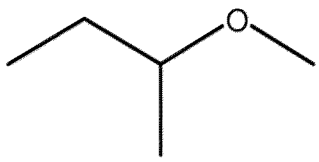
formula II-5

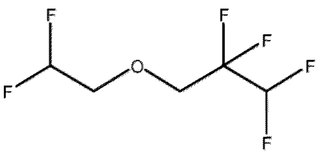
formula II-6

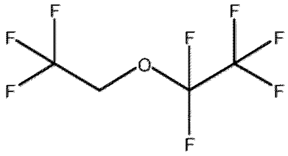
formula II-7

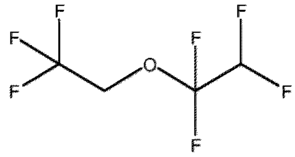
formula II-8

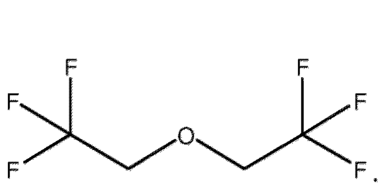
formula II-9

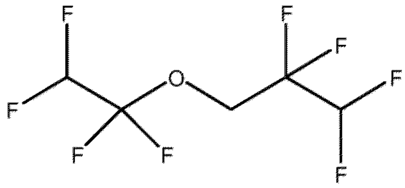
formula II-10

In some embodiments, z≥50.

In some embodiments, the electrolyte includes an additive. The additive includes at least one of a compound of formula IV, a compound of formula V, or a nitrile additive, where $R_{41}$, $R_{42}$, $R_{43}$, $R_{44}$, $R_{45}$, $R_{46}$, $R_{45}$, $R_{46}$, $R_{51}$, $R_{52}$, $R_{53}$, and $R_{54}$ are each independently selected from H, halogen, substituted or unsubstituted $C_{1-3}$ alkyl group, substituted or unsubstituted $C_{2-3}$ alkenyl group, substituted or unsubstituted $C_{2-3}$ alkynyl group, or substituted or unsubstituted $C_{6-12}$ aryl group; and the nitrile additive includes at least one of succinonitrile (SN), glutaronitrile (GN), adiponitrile (ADN), pimelonitrile, suberonitrile (SUN), decanedinitrile, azelanitrile, methylglutaronitrile (m-GN), 1,3,6-hexanetrinitrile (HTCN), or 1,4-dicyanobutene (DCB)

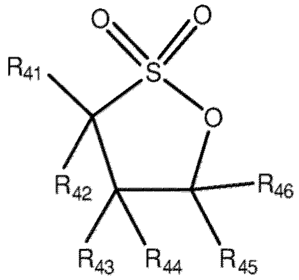
formula IV

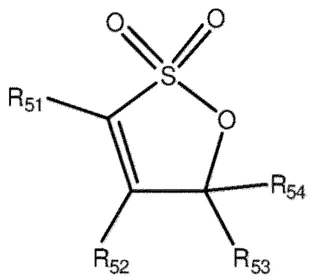
formula V.

In some embodiments, the compound of formula III and the cations (Li+) in the electrolytic salt can form a protective film on the surface of the positive electrode plate, reducing temperature accumulation during discharge. Further, when the electrolyte includes a compound of formula IV or formula V, or a nitrile compound, the compound of formula IV or formula V or the nitrile compound can be particularly advantageously adsorbed on the surface of the protective film formed with the aid of the compound of formula III mentioned above, thereby significantly reducing oxidation reactions of the solvent on the surface of the positive electrode and reducing HP thickness swelling rate of the lithium-ion battery at high temperatures.

In some embodiments, the compound of formula IV includes at least one of the following:

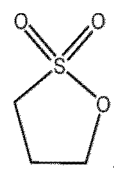
,
formula IV-1

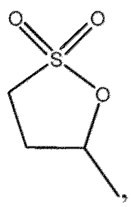
,
formula IV-2

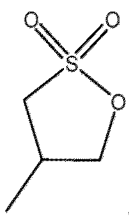
,
formula IV-3

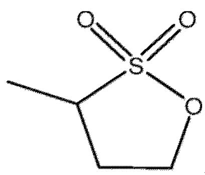
,
formula IV-4

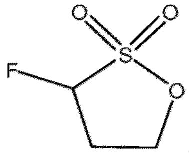,

formula IV-5

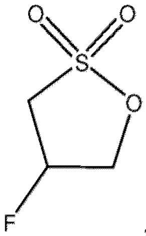,

formula IV-6

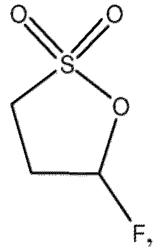

formula IV-7

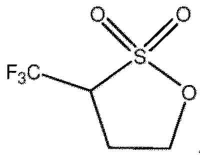,

formula IV-8

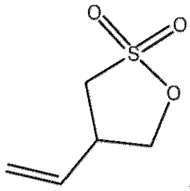,

formula IV-9

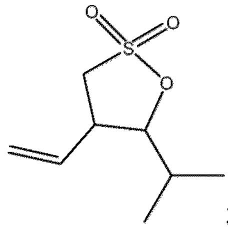;

formula IV-10

and/or the compound of formula V includes at least one of the following:

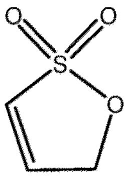,

formula V-1

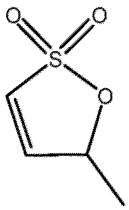,

formula V-2

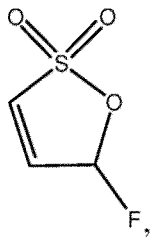

formula V-3

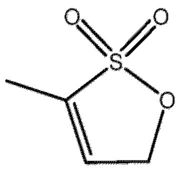,

formula V-4

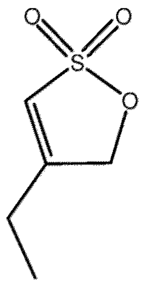.

formula V-5

In some embodiments, based on the total weight of the electrolyte, a percentage of the additive is 0.2 wt% to 10 wt%.

In some embodiments, a charge cut-off voltage of the electrochemical apparatus is ≥4.20 V.

In some embodiments, a gravimetric energy density of the electrochemical apparatus is ≥170 Wh/kg.

Another aspect of this application provides an electronic apparatus, the electronic apparatus including any one of the foregoing electrochemical apparatuses.

Additional aspects and advantages of some embodiments of this application are partly described in subsequent descriptions, or explained by implementation of some embodiments of this application.

## DETAILED DESCRIPTION

Embodiments of this application are described in detail below. Embodiments of this application should not be

construed as limitations to the scope of protection claimed by this application. Unless otherwise expressly indicated, the following terms used in this specification have the meanings described below.

The term "about" used herein are intended to describe and represent small variations. When used in combination with an event or a circumstance, the term may refer to an example in which the exact event or circumstance occurs or an example in which an extremely similar event or circumstance occurs. For example, when used in combination with a value, the term may refer to a variation range of less than or equal to ±10% of the value, for example, less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%. In addition, quantities, ratios, and other values are sometimes presented in the format of ranges in this specification. It should be understood that such range formats are used for convenience and simplicity and should be flexibly understood as including not only values clearly designated as falling within the range but also all individual values or sub-ranges covered by the range as if each value and sub-range were clearly designated.

In the description of embodiments and claims, a list of items preceded by the term "one of" may mean any one of the listed items. For example, if items A and B are listed, the phrase "one of A and B" means only A or only B. In another example, if items A, B, and C are listed, the phrase "one of A, B, and C" means only A, only B, or only C. The item A may contain a single element or a plurality of elements. The item B may contain a single element or a plurality of elements. The item C may include a single element or a plurality of elements.

In the description of embodiments and claims, a list of items preceded by the terms such as "at least one of", "at least one type of" or other similar terms may mean any combination of the listed items. For example, if items A and B are listed, the phrase "at least one of A and B" or "at least one of A or B" means only A, only B, or A and B. In another example, if items A, B, and C are listed, the phrase "at least one of A, B, and C" or "at least one of A, B, or C" means only A, only B, only C, A and B (excluding C), A and C (excluding B), B and C (excluding A), or all of A, B, and C. The item A may contain a single element or a plurality of elements. The item B may contain a single element or a plurality of elements. The item C may include a single element or a plurality of elements.

In the description of embodiments and claims, the carbon number, namely, the number after the capital letter "C", for example, "1", "3" or "10" in "$C_1$-$C_{10}$" and "$C_3$-$C_{10}$", represents the number of carbon atoms in a specific functional group. That is, the functional groups may include 1-10 carbon atoms and 3-10 carbon atoms, respectively. For example, "$C_1$-$C_4$ alkyl group" or "$C_{1-4}$ alkyl group" refers to an alkyl group having 1 to 4 carbon atoms, for example, $CH_3$-, $CH_3CH_2$-, $CH_3CH_2CH_2$-, $(CH_3)_2CH$-, $CH_3CH_2CH_2CH_2$-, $CH_3CH_2CH(CH_3)$- or $(CH_3)_3C$-.

As used herein, the term "alkyl group" is intended to be a linear saturated hydrocarbon structure having 1 to 10 carbon atoms. The term "alkyl group" is also intended to be a branched or cycling hydrocarbon structure having 3 to 10 carbon atoms. For example, an alkyl group may be an alkyl group having 1 to 10 carbon atoms, an alkyl group having 1 to 8 carbon atoms, an alkyl group having 1 to 6 carbon atoms, or an alkyl group having 1 to 4 carbon atoms. References to an alkyl group with a specific carbon number are intended to cover all geometric isomers with the specific carbon number. Therefore, for example, "butyl" is meant to include n-butyl, sec-butyl, isobutyl, tert-butyl, and cyclobutyl; and "propyl" includes n-propyl, isopropyl, and cyclopropyl. Examples of the alkyl group include, but are not limited to, a methyl group, an ethyl group, an n-propyl group, an isopropyl group, a cyclopropyl group, an n-butyl group, an isobutyl group, a sec-butyl group, a tert-butyl group, a cyclobutyl group, an n-pentyl group, an isopentyl group, a neopentyl group, a cyclopentyl group, a methylcyclopentyl group, an ethylcyclopentyl group, an n-hexyl group, an isohexyl group, a cyclohexyl group, an n-heptyl group, an octyl group, a cyclopropyl group, a cyclobutyl group, a norbornyl group, and the like. In addition, the alkyl group may be arbitrarily substituted.

The term "alkenyl group" refers to a straight-chain or branched monovalent unsaturated hydrocarbon group having at least one and usually 1, 2, or 3 carbon-carbon double bonds. Unless otherwise defined, the alkenyl group generally contains 2 to 10 carbon atoms. For example, the alkenyl group may be an alkenyl group having 2 to 8 carbon atoms, an alkenyl group having 2 to 6 carbon atoms, or an alkenyl group having 2 to 4 carbon atoms. Representative alkenyl groups include, for example, vinyl, n-propenyl, isopropenyl, n-but-2-enyl, but-3-enyl, and n-hex-3-enyl. In addition, the alkenyl group may be arbitrarily substituted.

The term "alkynyl group" refers to a straight-chain or branched monovalent unsaturated hydrocarbon having at least one and usually 1, 2, or 3 carbon-carbon triple bonds. Unless otherwise defined, the alkynyl group usually contains 2 to 10 carbon atoms, 2 to 8 carbon atoms, 2 to 6 carbon atoms, or 2 to 4 carbon atoms. Representative alkynyl groups include (for example) ethynyl, prop-2-ynyl(n-propynyl), n-but-2-ynyl, and n-hex-3-ynyl. In addition, the alkynyl group may be arbitrarily substituted.

The term "aryl group" covers monocyclic and polycyclic systems. A polycyclic ring may have two or more rings in which two carbons are shared by two adjacent rings (the rings are "fused"), where at least one of the rings is aromatic, and other rings may be, for example, a cycloalkyl group, a cycloalkenyl group, an aryl group, a heterocyclic and/or heteroaryl group. For example, the aryl group may contain 6 to 12 carbon atoms or 6 to 10 carbon atoms. Representative aryl groups include (for example) phenyl, methylphenyl, propylphenyl, isopropylphenyl, benzyl, naphth-1-yl, and naphth-2-yl. In addition, the aryl group may be arbitrarily substituted.

When the foregoing substituents are substituted, unless otherwise specified, they are substituted with one or more halogens.

As used herein, the term "halogen" covers F, Cl, Br, and I, and is preferably F or Cl.

The term "positive electrode active material" refers to a material capable of reversibly intercalating and deintercalating lithium ions. In some embodiments of this application, the positive electrode active material includes but is not limited to lithium-containing transition metal oxides.

### I. Electrochemical apparatus

The electrochemical apparatus according to this application includes any apparatus in which electrochemical reactions take place. Specific examples of the apparatus include all kinds of primary batteries, secondary batteries, fuel batteries, solar batteries, or capacitors. Especially, the electrochemical apparatus is a lithium secondary battery, including a lithium metal secondary battery, a lithium-ion secondary battery, a lithium polymer secondary battery, or a lithium-ion polymer secondary battery. In some embodiments, the electrochemical apparatus of this application includes a positive electrode, a negative electrode, a separator, and an electrolyte.

### [Positive electrode]

In some embodiments, the positive electrode includes a current collector and a positive electrode active material layer located on the current collector. The positive electrode active material layer includes a positive electrode active material.

The positive electrode active material includes at least one lithiated intercalation compound capable of reversibly intercalating and deintercalating lithium ions. In some embodiments of this application, the positive electrode active material includes lithium-containing transition metal oxides. In some embodiments, the positive electrode active material includes a composite oxide. In some embodiments, the composite oxide contains lithium and at least one element selected from cobalt, manganese, and nickel.

In some embodiments, the positive electrode active material may have a coating on its surface, or may be mixed with another compound having a coating. The coating may include at least one compound of a coating element selected from oxides of the coating element, hydroxides of the coating element, hydroxyl oxides of the coating element, oxycarbonates of the coating element, and hydroxy carbonates of the coating element. The compound used for the coating may be amorphous or crystalline.

In some embodiments, the coating element contained in the coating may include Mg, Al, Co, K, Na, Ca, Si, Ti, V, Sn, Ge, Ga, B, As, Zr or any combination thereof. The coating can be applied by any method as long as the method does not adversely affect the performance of the positive electrode active material. For example, the method may include any coating method known in the art, for example, spraying and dipping.

The positive electrode active material layer further includes a binder, and optionally includes a conductive material. The binder enhances binding between particles of the positive electrode active material, and binding between the positive electrode active material and the current collector.

In some embodiments, the binder includes but is not limited to polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, styrene-butadiene rubber, acrylic styrene-butadiene rubber, epoxy resin, and nylon.

In some embodiments, the conductive material includes but is not limited to a carbon-based material, a metal-based material, a conductive polymer, and a mixture thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fiber, copper, nickel, aluminum or silver. In some embodiments, the conductive polymer is a polyphenylene derivative.

In some embodiments, the current collector may be, but is not limited to, aluminum.

The positive electrode can be prepared by a preparation method known in the art. For example, the positive electrode may be obtained by using the following method: mixing the active material, the conductive material, and the binder in a solvent to prepare an active material composition, and applying the active material composition on the current collector. In some embodiments, the solvent may include, but is not limited to, N-methylpyrrolidone and the like.

In some embodiments, the positive electrode is made by forming, on the current collector, a positive electrode material using a positive electrode active substance layer including powder of the compound of lithium transition metal family and a binder.

In some embodiments, the positive electrode active substance layer can usually be made by the following operations: mixing the positive electrode material and the binder (a conductive material and a thickener as required) in a dry process to make a sheet form, pressing the obtained sheet to the positive electrode current collector, or dissolving or

dispersing these materials in a liquid medium to form a slurry, and applying the slurry on the positive electrode current collector as a coating and dried.

**[Negative electrode]**

The material, composition, and manufacturing method of the negative electrode used in the electrochemical apparatus of this application may include any technology disclosed in the prior art. In some embodiments, the negative electrode is the negative electrode recorded in US patent application US9812739B, which is incorporated into this application by reference in its entirety.

In some embodiments, the negative electrode includes a current collector and a negative electrode active material layer located on the current collector. The negative electrode active material includes a material for reversibly intercalating/deintercalating lithium ions. In some embodiments, the material for reversibly intercalating/deintercalating lithium ions includes a carbon material. In some embodiments, the carbon material may be any carbon-based negative electrode active material commonly used in a lithium-ion chargeable battery. In some embodiments, the carbon material includes but is not limited to crystalline carbon, amorphous carbon, or a mixture thereof. The crystalline carbon may be amorphous, plate-shaped, flake-shaped, spherical or fiber-shaped natural graphite or artificial graphite. The amorphous carbon may be soft carbon, hard carbon, mesophase pitch carbide, calcined coke, or the like.

In some embodiments, the negative electrode active material layer includes a negative electrode active material. The specific types of the negative electrode active material are not subject to specific restrictions, and can be selected according to requirements. In some embodiments, the negative electrode active material includes but is not limited to lithium metal, structured lithium metal, natural graphite, artificial graphite, mesocarbon microbeads (MCMB), hard carbon, soft carbon, silicon, a silicon-carbon composite, a Li-Sn alloy, a Li-Sn-O alloy, Sn, SnO, $SnO_2$, spinel-structure lithiated $TiO_2$-$Li_4Ti_5O_{12}$, a Li-Al alloy, or any combination thereof. The silicon-carbon composite refers to one containing at least about 5 wt% silicon based on a weight of the silicon-carbon negative electrode active material.

When the negative electrode includes a silicon-carbon compound, based on a total weight of the negative electrode active material, silicon:carbon = about 1:10-10:1, and the median particle size D50 of the silicon-carbon compound is about 0.1 microns to 20 microns. When the negative electrode includes an alloy material, the negative electrode active substance layer can be formed using a method such as a vapor deposition method, sputtering method, and plating method. When the negative electrode includes a lithium metal, the negative electrode active substance layer can be formed, for example, with a spherical twisted conductive skeleton and metal particles dispersed in the conductive skeleton. In some embodiments, the spherical twisted conductive skeleton may have a porosity of about 5% to about 85%. In some embodiments, a protective layer may be further provided on the lithium metal negative electrode active substance layer.

In some embodiments, the negative electrode active material layer may include a binder, and optionally includes a conductive material. The binder improves binding between particles of the negative electrode active material and binding between the negative electrode active material and the current collector. In some embodiments, the binder includes but is not limited to polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(vinylidene fluoride), polyethylene, polypropylene, styrene-butadiene rubber, acrylic styrene-butadiene rubber, epoxy resin, or nylon.

In some embodiments, the conductive material includes but is not limited to a carbon-based material, a metal-based material, a conductive polymer, or a mixture thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fiber, copper, nickel, aluminum or silver. In some embodiments, the conductive polymer is a polyphenylene derivative.

In some embodiments, the negative electrode current collector includes but is not limited to copper foil, nickel foil, stainless steel foil, titanium foil, foamed nickel, foamed copper, a polymer substrate coated with conductive metal, and any combination thereof.

The negative electrode can be prepared by using a preparation method known in the art. For example, the negative electrode can be obtained using the following method: mixing the active material, the conductive material, and the binder in a solvent to prepare an active material composition, and applying the active material composition on the current collector. In some embodiments, the solvent may include water, but is not limited thereto.

**[Separator]**

In some embodiments, the electrochemical apparatus according to this application has a separator provided between the positive electrode and the negative electrode to prevent short circuits. The separator used in the electrochemical apparatus according to this application is not particularly limited to any material or shape, and may be based on

any technology disclosed in the prior art. In some embodiments, the separator includes a polymer or an inorganic substance formed by a material stable to the electrolyte of this application.

For example, the separator may include a substrate layer and a surface treatment layer. The substrate layer is a non-woven fabric, a membrane, or a composite membrane having a porous structure, and a material of the substrate layer is at least one selected from polyethylene, polypropylene, polyethylene terephthalate, or polyimide. Specifically, a polypropylene porous membrane, a polyethylene porous membrane, a polypropylene non-woven fabric, a polyethylene non-woven fabric, or a polypropylene-polyethylene-polypropylene porous composite membrane may be selected. The substrate layer may be a single layer or multiple layers. When the substrate layer is multiple layers, the composition of the polymers of different substrate layers may be the same or different, and the weight-average molecular weight of the polymers of different substrate layers is not completely the same. When the substrate layer is multiple layers, the closed pore temperature of the polymers of different substrate layers is different.

In some embodiments, at least one surface of the substrate layer is provided with a surface treatment layer, and the surface treatment layer may be a polymer layer or an inorganic substance layer, or a layer formed by mixing a polymer and an inorganic substance.

In some embodiments, the separator includes a porous substrate and a coating layer, where the coating layer includes inorganic particles and a binder.

In some embodiments, the coating layer has a thickness of about 0.5 microns to about 10 microns, about 1 micron to about 8 microns, or about 3 microns to about 5 microns.

In some embodiments, the inorganic particles are selected from at least one of $SiO_2$, $Al_2O_3$, CaO, $TiO_2$, $ZnO_2$, MgO, $ZrO_2$, $SnO_2$, $Al(OH)_3$, or AlOOH. In some embodiments, the particle size of the inorganic particles is about 0.001 microns to about 3 microns.

In some embodiments, the binder is selected from at least one of polyvinylidene fluoride (PVDF), polyvinylidene fluoride-hexafluoropropylene copolymer (PVDF-HFP), polyvinylpyrrolidone (PVP), polyacrylate, pure acrylic emulsion (an anionic acrylic emulsion formed by copolymerization of acrylate and special functional monomers), styrene-acrylic emulsion (styrene-acrylate emulsion is obtained by emulsion copolymerization of styrene and acrylate monomers), or styrene-butadiene emulsion (SBR, obtained by emulsion copolymerization of butadiene and styrene).

**[Electrolyte]**

The electrolyte according to this application includes a diluent, an electrolytic salt, and a compound of formula III. The diluent is selected from a group consisting of a compound of formula I and a compound of formula II. A molar mass of the diluent is Mz, and based on a total weight of the electrolyte, a percentage of the diluent is z wt%; a molar mass of the electrolytic salt is Mx, and based on the total weight of the electrolyte, a percentage of the electrolytic salt is x wt%; and a molar mass of the compound of formula III is My, and based on the total weight of the electrolyte, a percentage of the compound of formula III is y wt%, satisfying:

$$0.4:1 \leq \frac{y}{My} : \frac{x}{Mx} \leq 4:1;$$

and

$$\frac{\frac{z}{Mz}}{\frac{y}{My}+\frac{x}{Mx}} \geq 1.5$$

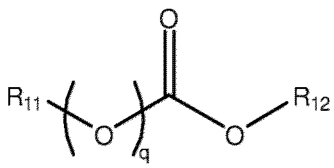 formula I 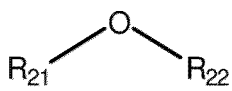 formula II

where q is 0 or 1, $R_{11}$ and $R_{12}$ are selected from $C_{1-3}$ alkyl group and fluorine-substituted $C_{1-3}$ alkyl group, and $R_{21}$ and $R_{22}$ are selected from $C_{1-4}$ alkyl group and fluorine-substituted $C_{1-4}$ alkyl group; and

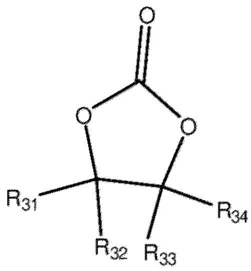 formula III,

where $R_{31}$, $R_{32}$, $R_{33}$, and $R_{34}$ are selected from H, F, $C_{1-3}$ alkyl group, fluorine-substituted $C_{1-3}$ alkyl group, and at least one of $R_{31}$, $R_{32}$, $R_{33}$, or $R_{34}$ is a fluorine atom.

In some embodiments, the diluent is a compound of formula I. In some embodiments, the diluent is a compound of formula II. In some embodiments, the diluent includes a compound of formula I and a compound of formula II.

In some embodiments, when the diluent includes multiple compounds, a molar mass of each individual diluent is $Mz_1$, $Mz_2$, $Mz_3$, ..., and $Mz_i$, respectively, and based on the total weight of the electrolyte, a percentage of each individual diluent is $z_1$ wt%, $z_2$ wt%, $z_3$ wt%, ..., and $z_i$ wt%, respectively, where $\frac{z}{Mz}=\frac{z_1}{Mz_1}+\frac{z_2}{Mz_2}+\frac{z_3}{Mz_3}\cdots\cdots\frac{z_i}{Mz_i}$.

In some embodiments, when the electrolytic salt includes multiple compounds, a molar mass of each individual electrolytic salt is $Mx_1$, $Mx_2$, $Mx_3$, ..., and $Mx_j$, respectively, and based on the total weight of the electrolyte, a percentage of each individual electrolytic salt is $x_1$ wt%, $x_2$ wt%, $x_3$ wt%, ..., and $x_j$ wt%, respectively, where $\frac{x}{Mx}=\frac{x_1}{Mx_1}+\frac{x_2}{Mx_2}+\frac{x_3}{Mx_3}\cdots\cdots\frac{x_j}{Mx_j}$.

In some embodiments, when the compound of formula III includes multiple compounds, a molar mass of each individual compound of formula III is $My_1$, $My_2$, $My_3$,..., and $My_k$, respectively, and based on the total weight of the electrolyte, a percentage of each individual compound of formula III is $y_1$ wt%, $y_2$ wt%, $y_3$ wt%, ..., and $y_k$ wt%, respectively, where $\frac{y}{My}=\frac{y_1}{My_1}+\frac{y_2}{My_2}+\frac{y_3}{My_3}\cdots\cdots\frac{y_k}{My_k}$; and where i, j, and k are integers greater than 1.

In some embodiments, $0.5:1\leq\frac{y}{My}:\frac{x}{Mx}\leq3.5:1$. In some embodiments, the value of $\frac{y}{My}:\frac{x}{Mx}$ is 0.5, 0.6, 0.7, 0.8, 0.9, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, or any interval composed of them.

In some embodiments, $1.5\leq\frac{\frac{z}{Mz}}{\frac{y}{My}+\frac{x}{Mx}}\leq5$. In some embodiments, $1.5\leq\frac{\frac{z}{Mz}}{\frac{y}{My}+\frac{x}{Mx}}\leq4$.

In some embodiments, the value of $\frac{\frac{z}{Mz}}{\frac{y}{My}+\frac{x}{Mx}}$ is, for example, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, or any interval composed of them.

In some embodiments, the electrolytic salt includes at least one of hexafluorophosphate A-$PF_6$, bis(fluorosulfonyl)imide A-FSI, bis(trifluoromethanesulfonyl)imide A-TFSI, difluorooxalate borate A-DFOB, or difluorooxalate phosphate A-DFOP, where A is selected from lithium ions, sodium ions, potassium ions, and cesium ions, and $10\leq x\leq25$. In some embodiments, x is, for example, 10, 11, 12, 13, 14, 15, 16, 17, 18, 19, 20, 21, 22, 23, 24, 25, or any interval composed of them.

In some embodiments, the compound of formula III includes at least one of fluoroethylene carbonate or difluoroethylene carbonate, and $5\leq y\leq30$. In some embodiments, y is 5, 6, 7, 8, 9, 10, 11, 12, 13, 14, 15, 16, 17, 18, 19, 20, 21, 22, 23, 24, 25, 26, 27, 28, 29, 30, or any interval composed of them.

In some embodiments, the compound of formula III includes fluoroethylene carbonate, and based on the total weight of the electrolyte, a percentage of fluoroethylene carbonate is more than 10 wt%. For example, the percentage of fluoroethylene carbonate is 10 wt%, 11 wt%, 12 wt%, 13 wt%, 14 wt%, 15 wt%, 16 wt%, 17 wt%, 18 wt%, 19 wt%, 20 wt%, 21 wt%, 22 wt%, 23 wt%, 24 wt%, 25 wt%, 26 wt%, 27 wt%, 28 wt%, 29 wt%, or 30 wt%.

In some embodiments, the dielectric constant ε of the diluent is ≤10.

In some embodiments, z≥50. In some embodiments, z is 50, 55, 60, 65, 70, 75, 80, 85, or any interval composed of them.

In some embodiments, the electrolyte includes an additive. The additive includes at least one of a compound of formula IV, a compound of formula V, or a nitrile additive, where $R_{41}$, $R_{42}$, $R_{43}$, $R_{44}$, $R_{45}$, $R_{46}$, $R_{51}$, $R_{52}$, $R_{53}$, and $R_{54}$ are each independently selected from H, halogen, substituted or unsubstituted $C_{1-3}$ alkyl group, substituted or unsubstituted $C_{2-3}$ alkenyl group, substituted or unsubstituted $C_{2-3}$ alkynyl group, or substituted or unsubstituted $C_{6-12}$ aryl group; and the nitrile additive includes at least one of succinonitrile (SN), glutaronitrile (GN), adiponitrile (ADN), pimelonitrile, suberonitrile (SUN), decanedinitrile, azelanitrile, methylglutaronitrile (m-GN), 1,3,6-hexanetrinitrile (HTCN), or 1,4-dicyanobutene (DCB)

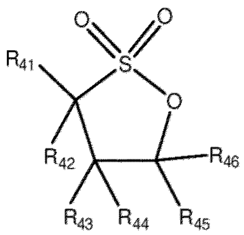 formula IV 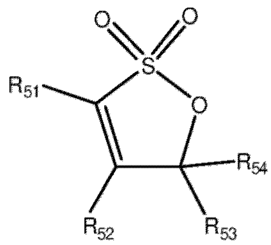 formula V.

In some embodiments, the compound of formula IV includes at least one of the following:

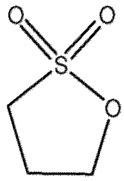,
formula IV-1

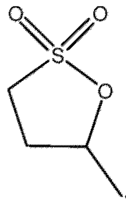,
formula IV-2

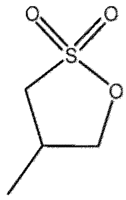,
formula IV-3

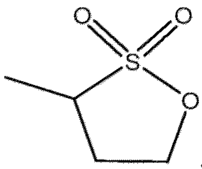,
formula IV-4

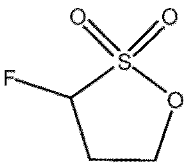,
formula IV-5

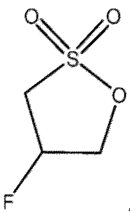,
formula IV-6

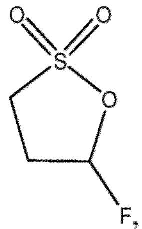,
formula IV-7

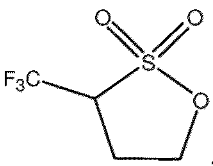,
formula IV-8

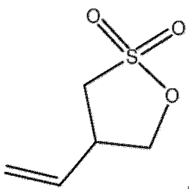,
formula IV-9

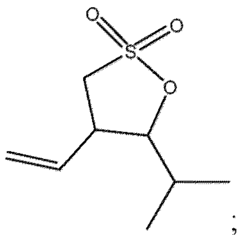;
formula IV-10

and/or the compound of formula V includes at least one of the following:

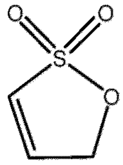,
formula V-1

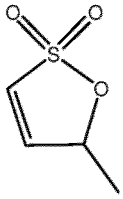,
formula V-2

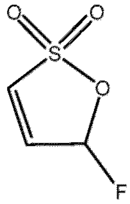,
formula V-3

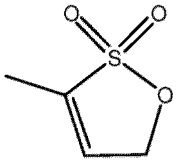,
formula V-4

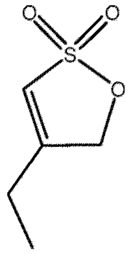.
formula V-5

In some embodiments, based on the total weight of the electrolyte, a percentage of the additive is 0.2 wt% to 10 wt%, for example, 0.2 wt%, 0.5 wt%, 0.8 wt%, 1.0 wt%, 2.0 wt%, 3.0 wt%, 4.0 wt%, 5.0 wt%, 6.0 wt%, 7.0 wt%, 8.0 wt%, 9.0 wt%, 10.0 wt%.

In some embodiments, a charge cut-off voltage of the electrochemical apparatus is ≥4.20 V. In some embodiments, the charge cut-off voltage of the electrochemical apparatus is 4.20, 4.21, 4.22, 4.23, 4.24, 4.25, 4.26, 4.27, 4.28, 4.29, 4.30. In some embodiments, the charge cut-off voltage of the electrochemical apparatus is 4.25.

In some embodiments, a gravimetric energy density of the electrochemical apparatus is ≥170 Wh/kg.

In an electrolyte in this application, the diluent has weak coordination ability and weak solvation with cations. When driven by the electric field inside the battery, the diluent is less likely to migrate to the electrode surface, thereby reducing the occurrence of side reactions. In addition, the solvation structure formed by the compound of formula III and cations migrates to the electrode surface under the drive of the electric field, forming a stable interface protective layer. Thus, even when the charge cut-off voltage of the electrochemical apparatus is ≥4.20 V or the gravimetric energy density of the electrochemical apparatus is ≥170 Wh/kg, the desired stability can still be achieved.

The electrolyte used in the electrochemical apparatus according to this application is any one of the foregoing electrolytes in this application. In addition, the electrolyte used in the electrochemical apparatus according to this application may also include other electrolytes within the scope without departing from the essence of this application.

## II. Electronic apparatus

An electronic apparatus of this application may be any apparatus using the electrochemical apparatus of this application.

In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, or a lithium-ion capacitor.

To achieve the foregoing objectives and enable persons skilled in the art to understand the solution of this application, the specific embodiments of this application are provided as examples. It should be noted that the described embodiments are some but not all embodiments of this application.

## III. Test method

1. Cycle capacity retention rate test of lithium-ion battery

The lithium-ion battery was placed in a 45°C thermostat and stood for 30 minutes to bring the lithium-ion battery to

a constant temperature. The lithium-ion battery that had reached a constant temperature was charged at a constant current of 1C to a voltage of 4.25 V, then charged at a constant voltage to a current of 0.05C, left standing for 15 minutes, then discharged at 4C to 2.8 V, left standing for 15 minutes, and the discharge capacity at this step was recorded as C0. After the battery was cycled at the foregoing charge and discharge rates for 600 cycles, the discharge capacity at the 600th cycle was recorded as C1. The battery capacity retention rate C=(C0-C1)/C0.

2. Discharge temperature rise test of lithium-ion battery

The temperature sensor wire of a multi-channel thermometer was attached to the center of the battery surface, and then the battery was wrapped with insulation cotton, placed in a temperature-adjustable high and low temperature chamber with the temperature set to 25°C, and left standing for 60 minutes. The battery was then discharged at 0.2C to 2.8 V, left standing for 15 minutes, then charged at a constant current of 0.5C to a voltage of 4.25 V, then charged at a constant voltage to a current of 0.05C, left standing for 15 minutes, and then discharged at 4C to 2.8 V. The multi-channel thermometer recorded the temperature change throughout the discharge process, and the discharge temperature rise of the battery was obtained by subtracting the lowest temperature from the highest temperature in the discharge process.

3. High-temperature storage test of lithium-ion battery

In a 25°C constant temperature room, the lithium-ion battery was charged at a constant current of 0.5C to a voltage of 4.25 V, then charged at a constant voltage to a current of 0.05C, and the battery thickness d1 was recorded at that moment. The lithium-ion battery was then placed in a high-temperature oven at 80°C for 24 hours, and then the battery was removed to immediately measure the battery thickness d2 at that moment. The high-temperature storage thickness swelling rate d=(d2-d1)/d1.

**Examples 1-1 to 1-17**

Preparation of negative electrode: Negative electrode active material artificial graphite, thickener carboxymethyl cellulose (CMC) sodium, and binder styrene-butadiene rubber (SBR) were mixed in a weight ratio of 97:1:2, and added with deionized water. A negative electrode slurry was obtained under the action of a vacuum mixer, where the solid content of the negative electrode slurry was 54 wt%. The negative electrode slurry was uniformly applied on a negative electrode current collector copper foil. The coated copper foil was dried at 85°C, then cold-pressed to obtain a negative electrode active material layer, followed by cutting and slitting, then was dried under vacuum conditions at 120°C for 12 hours to obtain a negative electrode.

Preparation of positive electrode: Positive electrode active material $LiNi_{0.83}Co_{0.07}Mn_{0.1}O_2$, conductive agent Super P, and binder polyvinylidene fluoride were mixed in a weight ratio of 97:1.4:1.6, added with N-methylpyrrolidone (NMP), and stirred to uniformity under the action of a vacuum mixer to obtain a positive electrode slurry, where the solid content of the positive electrode slurry was 72 wt%. The positive electrode slurry was uniformly applied on a positive electrode current collector aluminum foil. The coated aluminum foil was dried at 85°C, followed by cold-pressing, cutting, and slitting, then dried under vacuum conditions at 85°C for 4 hours to obtain a positive electrode.

Preparation of electrolyte: In a dry argon atmosphere glove box, a compound of formula III and a diluent were mixed, fully stirred, added with an electrolytic salt, and then mixed to uniformity to obtain an electrolyte, where types and percentages of the compound of formula III, the diluent, and the electrolytic salt are described in Table 1.

Preparation of separator: A 9-micron thick polyethylene (PE) separator was selected, applied with polyvinylidene fluoride (PVDF) slurry and Al2O3 slurry, and dried, and then a final separator was obtained.

Preparation of lithium-ion battery: The positive electrode plate, separator, and negative electrode plate were stacked in sequence, so that the separator was placed between the positive electrode plate and the negative electrode plate for separation. A thus formed stack was wound and welded with tabs, and then placed in an outer packaging foil aluminum plastic film. Then the prepared electrolyte was injected, followed by processes such as vacuum packaging, standing, formation, shaping, and capacity testing, to obtain a soft pouch lithium-ion battery (with a thickness of 3.3 mm, a width of 39 mm, and a length of 96 mm).

**Comparative example 1-1**

In Comparative example 1-1, a method basically the same as that in Example 1-1 was used, except that the electrolyte was prepared by the following steps: In a dry argon atmosphere glove box, ethylene carbonate (EC) and ethyl methyl carbonate (EMC) were mixed in a mass ratio of EC:EMC=20:60, then added with $LiPF_6$ and mixed to uniformity to obtain the electrolyte, where the percentage of $LiPF_6$ is shown in Table 1.

**Comparative example 1-2**

In Comparative example 1-3, a method basically the same as that in Example 1-1 was used, where types and percentages of the compound of formula III, the diluent, and the electrolytic salt are described in Table 1.

**Comparative example 1-3**

In Comparative example 1-4, a method basically the same as that in Example 1-1 was used, where types and percentages of the compound of formula III, the diluent, and the electrolytic salt are described in Table 1.

**Table 1**

| | Electrolytic salt and its weight percentage | | | $\frac{x}{Mx}$ | Compound of formula III and its weight percentage | $\frac{y}{My}$ | Diluent and its weight percentage | | | | $\frac{z}{Mz}$ | $\frac{y}{My}:\frac{x}{Mx}$ | $\frac{\frac{z}{Mz}}{\frac{y}{My}+\frac{x}{Mx}}$ | Cycle retention rate | Discharge temperature rise |
|---|---|---|---|---|---|---|---|---|---|---|---|---|---|---|---|
| Component | $LiPF_6$ | LiFSI | LiDFOB | | FEC | | Compound of formula I | | Compound of formula II | | \ | \ | \ | | |
| | | | | | | | Type | Percentage | Type | Percentage | \ | \ | \ | | |
| Comparative example 1-1 | 14.4% | \ | \ | 0.095% | \ | \ | EMC | 68.5% | \ | \ | 0.65% | \ | \ | 61.2% | 40.2 |
| Comparative example 1-2 | 14.4% | \ | \ | 0.095% | 4.0% | 0.037% | EMC | 81.6% | \ | \ | 0.78% | 0.39 | 5.92 | 60.1% | 40.0 |
| Comparative example 1-3 | 13.5% | \ | \ | 0.089% | 31.0% | 0.29% | EMC | 55.5% | | | 0.53% | 3.29 | 1.40 | 62.4% | 39.5 |
| Example 1-1 | 10.0% | \ | \ | 0.066% | 27.8% | 0.26% | EMC | 62.2% | \ | \ | 0.60% | 3.98 | 1.84 | 75.2% | 36.6 |
| Example 1-2 | 12.5% | \ | \ | 0.082% | 15.0% | 0.14% | EMC | 72.5% | \ | \ | 0.70% | 1.72 | 3.11 | 75.8% | 35.5 |
| Example 1-3 | 14.4% | \ | \ | 0.095% | 12.0% | 0.11% | EMC | 73.6% | \ | \ | 0.71% | 1.20 | 3.40 | 76.2% | 35.1 |
| Example 1-4 | 15.0% | \ | \ | 0.099% | 20.0% | 0.19% | EMC | 65.0% | \ | \ | 0.62% | 1.91 | 2.17 | 75.5% | 36.3 |
| Example 1-5 | 18.8% | \ | \ | 0.123% | 18.0% | 0.17% | EMC | 63.3% | \ | \ | 0.61% | 1.38 | 2.07 | 76.1% | 35.2 |
| Example 1-6 | 27.0% | \ | \ | 0.178% | 8.0% | 0.09% | EMC | 65.0% | \ | \ | 0.62% | 0.57 | 2.41 | 76.5% | 35.0 |
| Example 1-7 | 14.4% | \ | \ | 0.095% | 12.0% | 0.11% | DMC | 73.6% | \ | \ | 0.82% | 1.20 | 3.93 | 76.0% | 33.1 |
| Example 1-8 | 14.4% | \ | \ | 0.095% | 13.7% | 0.13% | Formula 1-6 | 71.9% | \ | \ | 0.34% | 1.37 | 1.51 | 76.4% | 35.3 |
| Example 1-9 | 14.4% | \ | \ | 0.095% | 12.0% | 0.11% | Formula 1-9 | 73.6% | \ | \ | 0.52% | 1.20 | 2.49 | 76.3% | 35.2 |
| Example 1-10 | 14.4% | \ | \ | 0.095% | 12.0% | 0.11% | Formula 1-13 | 73.6% | \ | \ | 0.58% | 1.20 | 2.81 | 76.4% | 35.0 |
| Example 1-11 | 14.4% | \ | \ | 0.095% | 12.0% | 0.11% | Formula 1-14 | 73.6% | \ | \ | 0.51% | 1.20 | 2.46 | 76.3% | 35.1 |
| Example 1-12 | 14.4% | \ | \ | 0.095% | 12.0% | 0.11% | \ | \ | Formula II-2 | 73.6% | 0.84% | 1.20 | 4.02 | 76.0% | 34.5 |
| Example 1-13 | 14.4% | \ | \ | 0.095% | 12.0% | 0.11% | \ | \ | Formula II-8 | 73.6% | 0.37% | 1.20 | 1.77 | 76.2% | 35.2 |

(continued)

| | Electrolytic salt and its weight percentage | | | $\frac{x}{Mx}$ | Compound of formula III and its weight percentage | $\frac{y}{My}$ | Diluent and its weight percentage | | | | $\frac{z}{Mz}$ | $\frac{y}{My}:\frac{x}{Mx}$ | $\frac{\frac{z}{Mz}}{\frac{y}{My}+\frac{x}{Mx}}$ | Cycle retention rate | Discharge temperature rise |
|---|---|---|---|---|---|---|---|---|---|---|---|---|---|---|---|
| Example 1-14 | 14.4% | \ | \ | 0.095% | 12.0% | 0.11% | EMC | 64% | Formula II-8 | 10.0% | 0.66% | 1.20 | 3.17 | 76.1% | 35.1 |
| Example 1-15 | 7.2% | 7.2% | \ | 0.086% | 12.0% | 0.11% | EMC | 73.6% | \ | \ | 0.71% | 1.32 | 3.55 | 76.5% | 34.9 |
| Example 1-16 | 2.5% | 11.9% | \ | 0.080% | 12.0% | 0.11% | EMC | 73.6% | \ | \ | 0.71% | 1.41 | 3.66 | 76.4% | 34.8 |
| Example 1-17 | 2.5% | 10.9% | 1.0% | 0.082% | 12.0% | 0.11% | EMC | 73.6% | \ | \ | 0.71% | 1.39 | 3.63 | 76.7% | 34.8 |

where "\" represents nonexistence.

It can be seen from comparisons between Examples 1-1 to 1-17 and Comparative examples 1-1 to 1-3 that when $\frac{\frac{z}{Mz}}{\frac{y}{My}+\frac{x}{Mx}} \geq 1.5$ and $0.4:1 \leq \frac{y}{My} : \frac{x}{Mx} \leq 4:1$, significant improved cycle retention rate and significant reduced discharge temperature rise can be achieved, indicating that the electrochemical apparatus according to this application can achieve significantly improved electrochemical performance and safety performance. In particular, it can be found from comparisons between Comparative example 1-3 and Example 1-8 that although the values of $\frac{\frac{z}{Mz}}{\frac{y}{My}+\frac{x}{Mx}}$ in them have only a small difference, affected by the critical threshold of 1.5, there are significant differences in cycle retention rate and discharge temperature rise between Comparative example 1-3 and Example 1-8. This further indicates the precise control of the percentages of the diluent, electrolytic salt, and compound of formula III according to the technical solution of this application.

## Example 2-1

In Example 2-1, a method basically the same as that in Example 1-3 was used, except that an additive was additionally added to the electrolyte, the additive being a compound of formula IV-1, and based on a total weight of the electrolyte, a percentage of the additive was 0.2 wt%.

## Example 2-2 to Example 2-16

In Examples 2-2 to 2-16, a method basically the same as that in Example 2-1 was used, except that types and percentages of the additives were selected according to Table 2.

**Table 2**

| | Compound of formula IV and its weight percentage | Compound of formula V and its weight percentage | Nitrile compound and its weight percentage | Cycle retention rate | Discharge temperature rise | High-temperature storage thickness swelling rate d |
|---|---|---|---|---|---|---|
| Example 1-3 | \ | \ | \ | 76.2% | 35.1 | 20.9% |
| Example 2-1 | 0.2% formula IV-1 | \ | \ | 77.1% | 35.1 | 19.2% |
| Example 2-2 | 1% formula IV-1 | \ | \ | 77.5% | 35.1 | 17.9% |
| Example 2-3 | 3% formula IV-1 | \ | \ | 77.8% | 35.2 | 16.7% |
| Example 2-4 | 5% formula IV-1 | \ | \ | 78.0% | 35.3 | 15.3% |
| Example 2-5 | 1% formula IV-4 | \ | \ | 77.4% | 35 | 18.0% |
| Example 2-6 | 1% formula IV-7 | \ | \ | 77.6% | 35.1 | 17.7% |
| Example 2-7 | \ | 0.2% formula V-1 | \ | 77.2% | 35.2 | 18.5% |
| Example 2-8 | \ | 0.2% formula V-3 | \ | 77.1% | 35.2 | 18.2% |
| Example 2-9 | 1% formula IV-1 | 0.2% formula V-1 | \ | 77.2% | 35.2 | 16.5% |
| Example 2-10 | \ | \ | 0.5% HTCN | 77.0% | 35.2 | 17.3% |
| Example 2-11 | \ | \ | 1% HTCN | 77.1% | 35.4 | 15.5% |
| Example 2-12 | \ | \ | 1% ADN | 76.8% | 35.1 | 16.1% |
| Example 2-13 | \ | \ | 1% SUN | 77.0% | 35.3 | 15.7% |
| Example 2-14 | 1% formula IV-1 | \ | 0.5% HTCN | 77.6% | 35.4 | 15.4% |
| Example 2-15 | \ | 0.2% formula V-1 | 0.5% HTCN | 77.4% | 35.2 | 15.6% |

(continued)

| | Compound of formula IV and its weight percentage | Compound of formula V and its weight percentage | Nitrile compound and its weight percentage | Cycle retention rate | Discharge temperature rise | High-temperature storage thickness swelling rate d |
|---|---|---|---|---|---|---|
| Example 2-16 | 1% formula IV-1 | 0.2% formula V-1 | 0.5% HTCN | 78.2% | 35.5 | 13.3% |
| where "\" represents nonexistence. | | | | | | |

Comparisons between Examples 2-1 to 2-16 and Example 1-3 show that a compound of formula IV, a compound of formula V, and a nitrile compound alone or in combination can improve high-temperature storage. This is because the compounds of formula IV and formula V can effectively form films on the surfaces of the positive and negative electrodes, inhibiting side reactions, and $Li_2SO_3$ or sulfonates in the film-forming components have high ionic conductivity, thereby reducing impedance. Nitrile compounds mainly rely on the electron-rich cyano group to adsorb on the surface of the positive electrode, reducing the oxidation reaction of the solvent on the surface of the positive electrode, thereby providing improvement in gas generation during high-temperature storage.

The above descriptions are only a few embodiments of this application and are not intended to limit this application in any form. Although this application has been disclosed with preferred embodiments as above, the embodiments are not intended to limit this application. Changes or modifications made by those skilled in the art using the technical content disclosed above without departing from the scope of the technical solution of this application are considered as equivalent embodiments and fall within the scope of the technical solution.

References to "some embodiments", "an embodiment", "another example", "examples", "specific examples", or "some examples" in the specification mean the inclusion of specific features, structures, materials, or characteristics described in the embodiment or example in at least one embodiment or example of the application. Therefore, descriptions in various places throughout this specification, such as "in some embodiments", "in the embodiments", "in an embodiment", "in another example", "in an example", "in a specific example", or "examples" do not necessarily refer to the same embodiment or example in this application. In addition, a specific feature, structure, material, or characteristic herein may be combined in any appropriate manner in one or more embodiments or examples. Although illustrative embodiments have been demonstrated and described, persons skilled in the art should understand that the foregoing embodiments are not to be construed as limiting this application, and that variations, substitutions, and modifications can be made to some embodiments without departing from the spirit, principle, and scope of this application, the variations, substitutions, and modifications also falling within the protection scope of this application.

## Claims

1. An electrochemical apparatus, comprising a positive electrode, a negative electrode, a separator, and an electrolyte; **characterized in that**,

   the electrolyte comprises a diluent, an electrolytic salt, and a compound of formula III;
   the diluent is selected from a group consisting of a compound of formula I and a compound of formula II, a molar mass of the diluent is Mz, and based on a total weight of the electrolyte, a percentage of the diluent is z wt%;
   a molar mass of the electrolytic salt is Mx, and based on the total weight of the electrolyte, a percentage of the electrolytic salt is x wt%; and
   a molar mass of the compound of formula III is My, and based on the total weight of the electrolyte, a percentage of the compound of formula III is y wt%, satisfying:

$$0.4:1 \leq \frac{y}{My} : \frac{x}{Mx} \leq 4:1;$$

   and

$$\frac{\frac{z}{Mz}}{\frac{y}{My}+\frac{x}{Mx}} \geq 1.5$$

the compound of formula I is

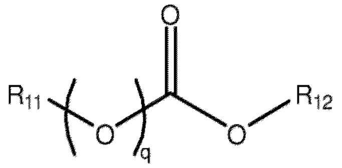

formula I ,

and the compound of formula II is

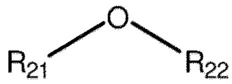

formula II

wherein q is 0 or 1, $R_{11}$ and $R_{12}$ are selected from $C_{1-3}$ alkyl group and fluorine-substituted $C_{1-3}$ alkyl group, and $R_{21}$ and $R_{22}$ are selected from $C_{1-4}$ alkyl group and fluorine-substituted $C_{1-4}$ alkyl group; and the compound of formula III is

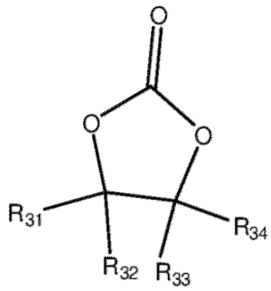

formula III,

wherein $R_{31}$, $R_{32}$, $R_{33}$, and $R_{34}$ are selected from H, F, $C_{1-3}$ alkyl group, fluorine-substituted $C_{1-3}$ alkyl group, and at least one of $R_{31}$, $R_{32}$, $R_{33}$, or $R_{34}$ is a fluorine atom.

2. The electrochemical apparatus according to claim 1, **characterized in that**,

$$0.5:1\le\frac{y}{My}:\frac{x}{Mx}\le 3.5:1.$$

3. The electrochemical apparatus according to claim 1 or 2, **characterized in that**,

$$1.5\le\frac{\frac{z}{Mz}}{\frac{y}{My}+\frac{x}{Mx}}\le 5.$$

4. The electrochemical apparatus according to any one of claims 1 to 3, **characterized in that**, $1.5\le\frac{\frac{z}{Mz}}{\frac{y}{My}+\frac{x}{Mx}}\le 4$.

5. The electrochemical apparatus according to any one of claims 1 to 4, **characterized in that**, the electrolytic salt comprises at least one of hexafluorophosphate A-$PF_6$, bis(fluorosulfonyl)imide A-FSI, bis(trifluoromethanesulfonyl) imide A-TFSI, difluorooxalate borate A-DFOB, or difluorooxalate phosphate A-DFOP; wherein A is selected from lithium ions, sodium ions, potassium ions, and cesium ions, and $10\le x\le 25$.

6. The electrochemical apparatus according to any one of claims 1 to 5, **characterized in that**, the compound of formula III comprises at least one of fluoroethylene carbonate or difluoroethylene carbonate, and $5\le y\le 30$.

7. The electrochemical apparatus according to any one of claims 1 to 6, **characterized in that**, the compound of formula

III comprises fluoroethylene carbonate; and based on the total weight of the electrolyte, a percentage of fluoroethylene carbonate is more than 10 wt%.

**8.** The electrochemical apparatus according to any one of claims 1 to 7, **characterized in that**, the compound of formula I comprises at least one of the following:

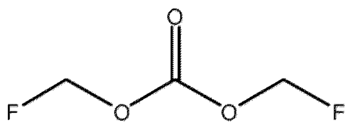
,
formula I-1

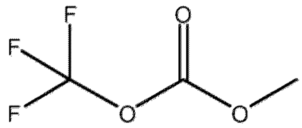
,
formula I-2

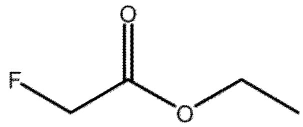
,
formula I-3

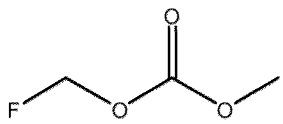
,
formula I-4

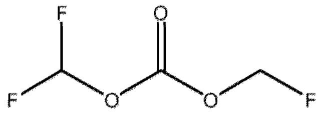
,
formula I-5

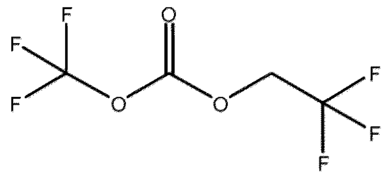
,
formula I-6

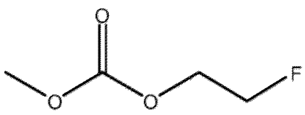
,
formula I-7

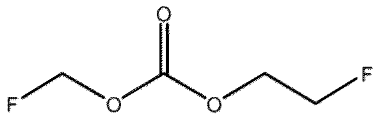
,
formula I-8

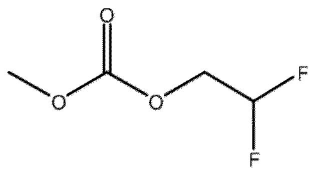
,
formula I-9

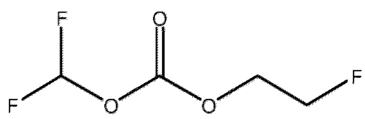
,
formula I-10

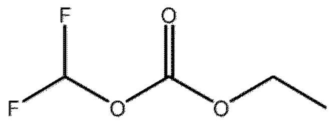
,
formula I-11

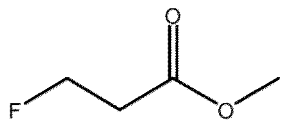
,
formula I-12

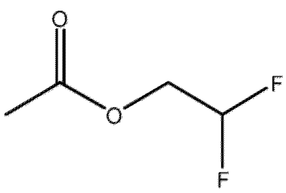
,
formula I-13

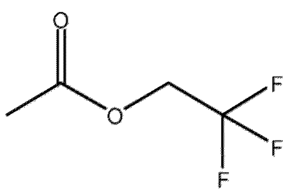
,
formula I-14

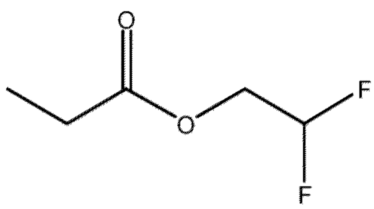
,
formula I-15

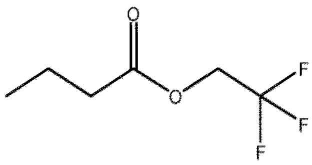
,
formula I-16

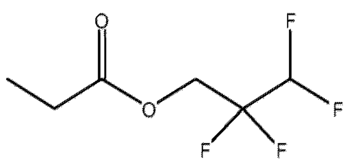
, or
formula I-17

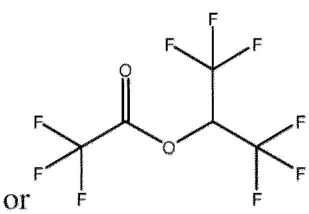
;
formula I-18

and/or the compound of formula II comprises at least one of the following:

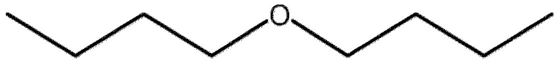 ,

formula II-1

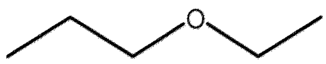 ,

formula II-2

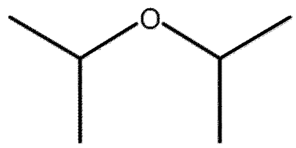 ,

formula II-3

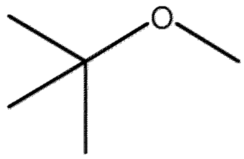 ,

formula II-4

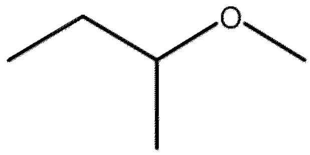 ,

formula II-5

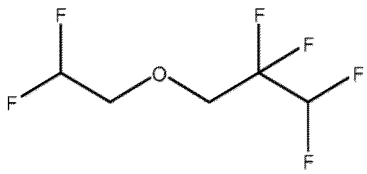 ,

formula II-6

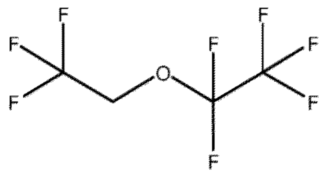 ,

formula II-7

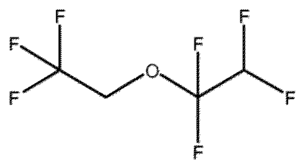 ,

formula II-8

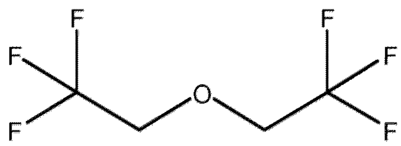 , or

formula II-9

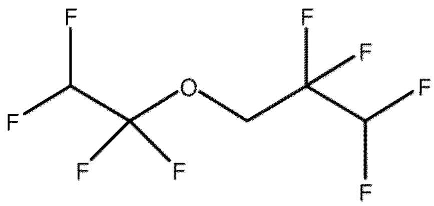 .

formula II-10

**9.** The electrochemical apparatus according to any one of claims 1 to 8, **characterized in that**, $z \geq 50$.

**10.** The electrochemical apparatus according to any one of claims 1 to 9, **characterized in that**, the electrolyte comprises an additive, the additive comprises at least one of a compound of formula IV, a compound of formula V, or a nitrile additive; wherein $R_{41}$, $R_{42}$, $R_{43}$, $R_{44}$, $R_{45}$, $R_{46}$, $R_{51}$, $R_{52}$, $R_{53}$, and $R_{54}$ are each independently selected from H, halogen, substituted or unsubstituted $C_{1-3}$ alkyl group, substituted or unsubstituted $C_{2-3}$ alkenyl group, substituted or unsubstituted $C_{2-3}$ alkynyl group, or substituted or unsubstituted $C_{6-12}$ aryl group; and the nitrile additive comprises at least one of succinonitrile, glutaronitrile, adiponitrile, pimelonitrile, suberonitrile, decanedinitrile, azelanitrile, methylglutaronitrile, 1,3,6-hexanetrinitrile, or 1,4-dicyanobutene;
the compound of formula IV is

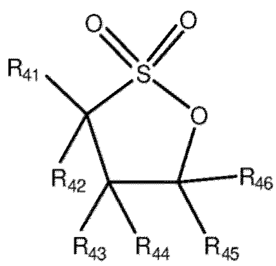 formula IV ,

and the compound of formula V is

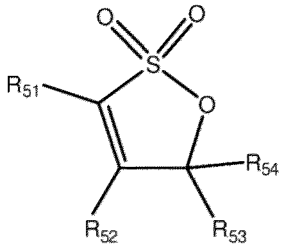

formula V.

11. The electrochemical apparatus according to claim 10, **characterized in that**, the compound of formula IV comprises at least one of the following:

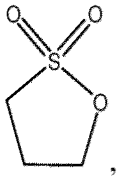,
formula IV-1

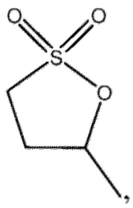,
formula IV-2

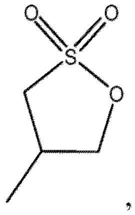,
formula IV-3

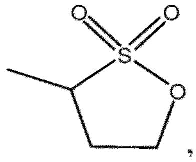,
formula IV-4

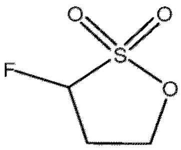,
formula IV-5

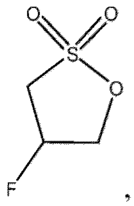,
formula IV-6

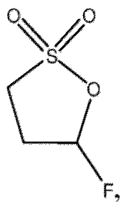,
formula IV-7

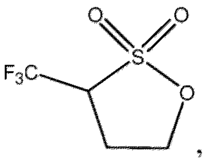,
formula IV-8

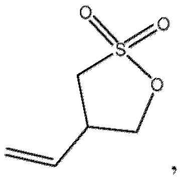,
formula IV-9

or

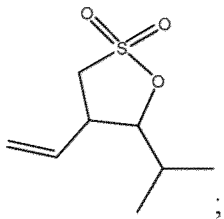;
formula IV-10

12. The electrochemical apparatus according to claim 10, **characterized in that**, the compound of formula V comprises at least one of the following:

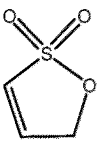,
formula V-1

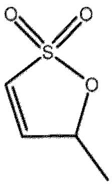,
formula V-2

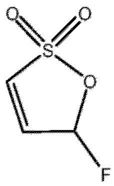,
formula V-3

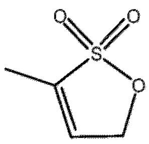,
formula V-4

or

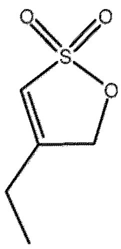.
formula V-5

13. The electrochemical apparatus according to claim 10, **characterized in that**, based on the total weight of the electrolyte, a percentage of the additive is 0.2 wt% to 10 wt%.

14. The electrochemical apparatus according to any one of claims 1 to 13, **characterized in that**, a charge cut-off voltage of the electrochemical apparatus is greater than or equal to 4.20 V and/or a gravimetric energy density of the electrochemical apparatus is greater than or equal to 170 Wh/kg.

15. An electronic apparatus, **characterized in that**, the electronic apparatus comprises the electrochemical apparatus according to any one of claims 1 to 14.

Europäisches Patentamt
European Patent Office
Office européen des brevets

# EUROPEAN SEARCH REPORT

Application Number
EP 24 19 4961

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 094 192 A (NINGDE AMPEREX TECHNOLOGY LTD) 25 February 2022 (2022-02-25) * claims 1-16 * * examples 1-7; table 1 * | 1-15 | INV. H01M10/0525 H01M10/0567 H01M10/0568 H01M10/0569 |
| X | WO 2018/050652 A1 (SOLVAY [BE]) 22 March 2018 (2018-03-22) * page 23; example 1 * * page 13, lines 8-23 * | 1-5 | |
| X | CN 110 931 873 B (SHANXI INST COAL CHEMISTRY CAS) 16 August 2022 (2022-08-16) * claims 1-3; examples 1-3 * | 1-15 | |
| X | US 2018/108937 A1 (DRACH ZOHAR [IL] ET AL) 19 April 2018 (2018-04-19) * paragraphs [0006], [0222], [0225], [0226] * | 1-15 | |
| X | US 2022/123297 A1 (LEE JUNG MIN [KR] ET AL) 21 April 2022 (2022-04-21) * claims 1-13 * * paragraphs [0012], [0058] - [0071] * | 1-15 | TECHNICAL FIELDS SEARCHED (IPC) H01M |
| X | US 2022/140394 A1 (HE MEINAN [US] ET AL) 5 May 2022 (2022-05-05) * example 1 * | 1-9 | |
| X | JP 2018 014209 A (TOYOTA IND CORP) 25 January 2018 (2018-01-25) * examples 1,2 * * paragraphs [0108], [0113] * | 1-9 | |

The present search report has been drawn up for all claims

2

| Place of search | Date of completion of the search | Examiner |
|---|---|---|
| Munich | 13 December 2024 | Haering, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 24 19 4961

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2024

| Patent document cited in search report | Publication date | Patent family member(s) | Publication date |
|---|---|---|---|
| CN 114094192 A | 25-02-2022 | CN 114094192 A | 25-02-2022 |
| | | WO 2023098268 A1 | 08-06-2023 |
| WO 2018050652 A1 | 22-03-2018 | CN 109997258 A | 09-07-2019 |
| | | CN 117613381 A | 27-02-2024 |
| | | EP 3513448 A1 | 24-07-2019 |
| | | JP 7389648 B2 | 30-11-2023 |
| | | JP 2019530157 A | 17-10-2019 |
| | | JP 2022180376 A | 06-12-2022 |
| | | KR 20190047004 A | 07-05-2019 |
| | | PL 3513448 T3 | 12-11-2024 |
| | | US 2019334197 A1 | 31-10-2019 |
| | | WO 2018050652 A1 | 22-03-2018 |
| CN 110931873 B | 16-08-2022 | NONE | |
| US 2018108937 A1 | 19-04-2018 | US 2018108937 A1 | 19-04-2018 |
| | | US 2019044180 A1 | 07-02-2019 |
| US 2022123297 A1 | 21-04-2022 | CN 113678297 A | 19-11-2021 |
| | | EP 3910716 A1 | 17-11-2021 |
| | | ES 2980696 T3 | 02-10-2024 |
| | | HU E067481 T2 | 28-10-2024 |
| | | JP 7134556 B2 | 12-09-2022 |
| | | JP 2022519502 A | 24-03-2022 |
| | | KR 20200114403 A | 07-10-2020 |
| | | PL 3910716 T3 | 29-07-2024 |
| | | US 2022123297 A1 | 21-04-2022 |
| | | WO 2020197278 A1 | 01-10-2020 |
| US 2022140394 A1 | 05-05-2022 | CN 114447437 A | 06-05-2022 |
| | | DE 102021113933 A1 | 05-05-2022 |
| | | US 2022140394 A1 | 05-05-2022 |
| JP 2018014209 A | 25-01-2018 | JP 6776682 B2 | 28-10-2020 |
| | | JP 2018014209 A | 25-01-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 9812739 B